# EUROPÄISCHE PATENTSCHRIFT

(11) **EP 0 546 427 B1**
(45) Veröffentlichungstag und Bekanntmachung des Hinweises auf die Patenterteilung: **05.04.1995**
(21) Anmeldenummer: 92120473.1
(22) Anmeldetag: 01.12.1992
(51) Int. Cl.: F16K 15/14, F15C 5/00

(54) **Mikroventil und Verfahren zu dessen Herstellung**
Microvalve and process of producing the same
Microsoupape et son procédé de fabrication

(30) Priorität: 02.12.1991 DE 4139668
(43) Veröffentlichungstag der Anmeldung: 16.06.1993
(73) Patentinhaber: Forschungszentrum Karlsruhe GmbH, 76133 Karlsruhe (DE)
(72) Erfinder: Schomburg, Werner, Dr., W-7500 Karlsruhe 1 (DE); Scherrer, Bernhard, W-7500 Karlsruhe 1 (DE)
(74) Vertreter: Gottlob, Peter, Dipl. Ing.

(56) Entgegenhaltungen:
- EP-A- 0 276 156
- EP-A- 0 420 353
- EP-A- 0 435 237
- US-A- 4 826 131
- PATENT ABSTRACTS OF JAPAN vol. 15, no. 290 (M-1139)1991 & JP-A-31 03 680

## Beschreibung

Die Erfindung betrifft ein Mikroventil und ein Verfahren zu dessen Herstellung.

Für die Herstellung kleiner Pumpen werden Mikroventile mit sehr kleinen Abmessungen benötigt. Aus der EP 0 104 685 ist ein Verfahren zur Herstellung einer Maske für die Mustererzeugung in der Röntgentiefenlithographie bekannt. Dabei wird die Maske (= Mikrostrukturen) auf drei Trägerschichten aufgebaut. Das Ergebnis des Verfahrens ist dann die Mikrostruktur auf einer Trägermembran. Es ist aber nicht möglich, diese Mikrostrukturen so zu gestalten, daß sich ein Mikroventil ergibt, da die Membran in zusammenhängender Form erhalten bleibt und kein Medium duch sie hindurchtreten kann.

Aus der US-A-4826131 ist ein Mikroventil bekannt, bei dem ein Ventilkörper durch magnetische Kräfte gegen einen Ventilsitz gedrückt wird, um das Ventil zu schließen. Bedingt durch das Herstellungsverfahren müssen Ventilsitz und Ventilkörper mit entsprechend hohem Aufwand aus einem relativ massiven Siliziumkristall geformt werden.

Die Erfindung hat die Aufgabe, ein Mikroventil und ein Verfahren zu dessen Herstellung derart auszugestalten, daß Mikroventile in dünnen Membranen leicht hergestellt werden können.

Diese Aufgabe wird durch die Patentansprüche 1 und 2 gelöst. Die Unteransprüche geben vorteilhafte Ausgestaltungen der Erfindung wieder.

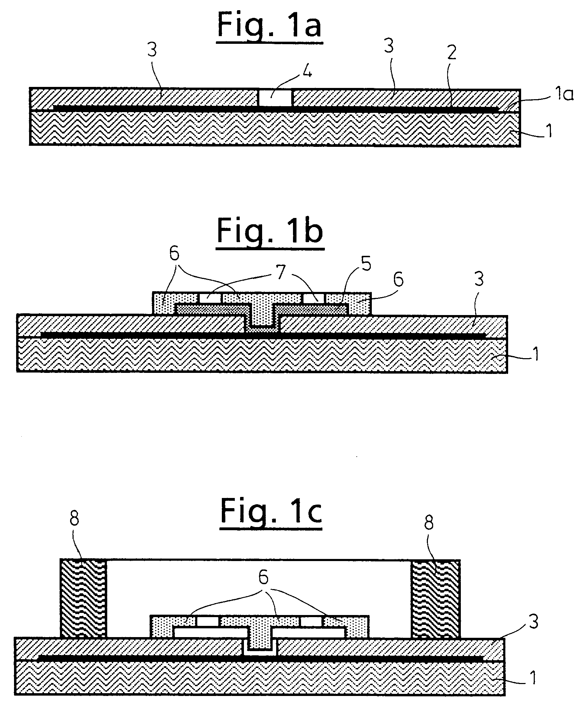

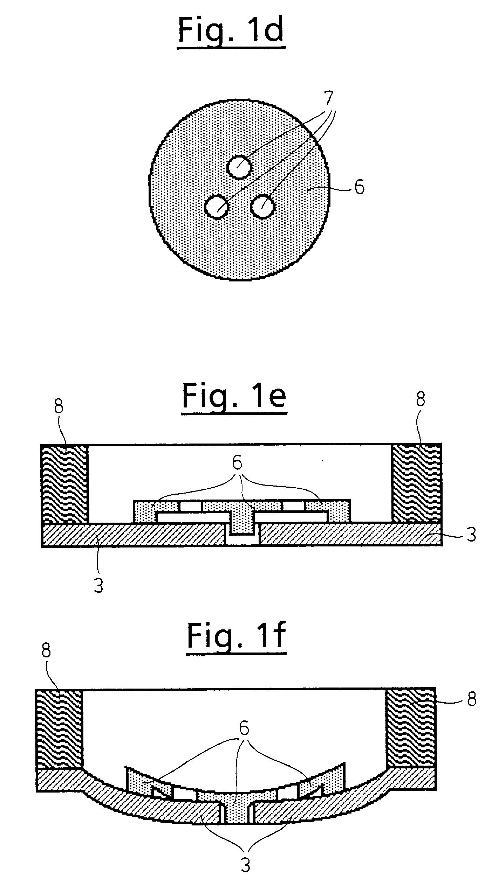

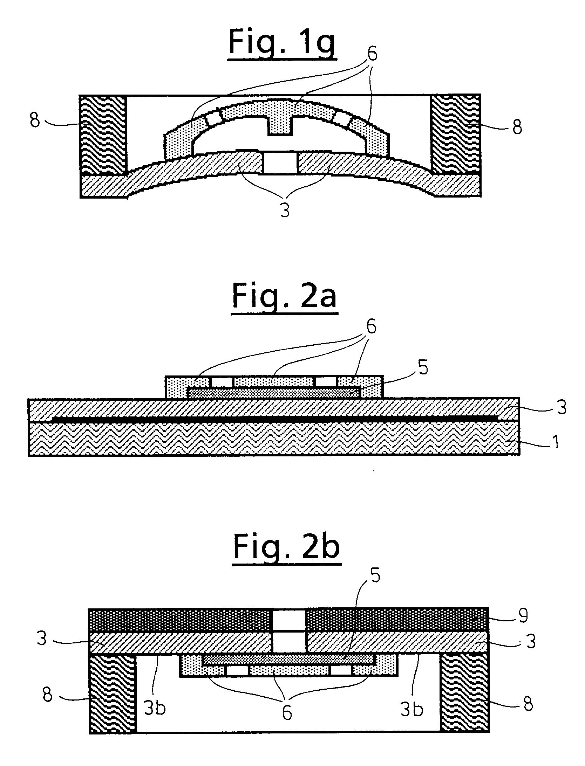

Die Erfindung wird im folgenden anhand der Figuren 1 bis 3 und dreier Ausführungsbeispiele näher erläutert. Dabei zeigen die Figuren schematisch die einzelnen Verfahrensschritte bzw. das Mikroventil im geschlossenen und im geöffneten Zustand.

Das erste Anwendungsbeispiel beschreibt die Ventilherstellung auf einem Substrat und die anschließende Übertragung des fertigen Ventils vom Substrat auf einen festen Rahmen.

Dieses Beispiel wird durch die Figuren 1a bis 1g erläutert.

Nach dem in EP 0 104 685 beschriebenen Verfahren wurde die Mitte einer Siliziumscheibe 1 mit einem Durchmesser von 100 mm und einer Dicke von 525 »m mit einer ca. 100 nm dünnen Kohlenstoffschicht 2 versehen. Dabei wurde nur ein ca. 3 mm breiter Rand 1a der Siliziumscheibe nicht mit Kohlenstoff bedeckt. Die ganze Siliziumscheibe wurde durch Magnetronzerstäubung mit einer ca. 3 »m dünnen Titanschicht 3 beschichtet. Durch einen sich der Beschichtung anschließenden Tempervorgang wurde in der Titanschicht eine innere mechanische Zugspannung von ca. 200 N/mm² eingestellt.

In die Titanschicht 3 wurde mit bekannten Methoden der Fotolithographie ein Loch 4 mit einem Durchmesser von ca. 170 »m eingeätzt (vergl. Figur 1a). Die Scheibe wurde durch Magnetronzerstäubung mit einer ca. 1 »m dicken Kupferschicht versehen und die Kupferschicht mit bekannten Methoden der Fotolithographie so strukturiert, daß das Loch 4 in der Titanschicht 3 von einer Kupferscheibe 5 mit einem Durchmesser von ca. 1 mm verschlossen blieb (vergl. Fig 1b). Über die so hergestellten Strukturen wurde dann mit den bekannten Methoden der Dünnschichttechnik eine Polyimidschicht aufgeschleudert und so strukturiert, daß über der Kupferscheibe 5 eine Polyimidscheibe 6 mit einem Durchmesser von ca. 5 mm entstand, in der sich um die Öffnung 4 in der Titanschicht herum drei Löcher 7 mit einem Durchmesser von ca. 100 »m befanden. Durch die Öffnung 4 in der Titanschicht entstand dabei ein Stopfen an der Polyimidscheibe 6, der die Öffnung 4 ausfüllte. Die Dicke der Polyimidschicht bzw. Polyimidscheibe 6 wurde dabei in verschiedenen Versuchen zwischen 0,45 »m und 2,2 »m variiert. Figur 1b zeigt den Schichtaufbau nach der Herstellung der Polyimidscheibe 6, während Figur 1d die laterale Anordnung der Löcher 7 in der Polyimidscheibe 6 darstellt.

Mit einem kleinen Tropfen 35 %iger Salpetersäure wurde die Kupferscheibe 5 durch die Löcher 7 hindurch aufgelöst. Um die so hergestellten Strukturen herum wurde ein fester Rahmen 8 auf die Titanschicht 3 aufgeklebt (vergl. Figur 1c) und nach dem aus EP 0 104 685 bekannten Verfahren wurden die auf der Siliziumscheibe hergestellten Strukturen zusammen mit der Titanschicht 3 vom Substrat abgelöst (Fig. 1e). Auf diese Weise entstand eine Ventilstruktur in einer 3 »m dünnen, über einem Rahmen 8 frei gespannten Titanmembran.

Der Rahmen 8 wurde in eine Testaparatur eingebaut und die Dichtigkeit des Ventils im geschlossenen Zustand mit Helium durch Erzeugung eines Differenzdruckes von 50 hPa gemessen.

Die durch den Einbau des verschlossenen Ventils bedingte Verminderung der Dichtigkeit der Testapparatur war geringer als ca. 2,3 * 10⁻⁴ hPa l/s. Zur ersten Öffnung von Ventilen mit einer ca. 0,45 »m dünnen Polyimidscheibe 6 wurde ein Differenzdruck von ca. 70 hPa benötigt. Nach Schließen der Ventile war der für ein wiederholtes Öffnen benötigte Differenzdruck so klein (< ca. 15 hPa), daß er mit dem vorhandenen Meßaufbau nicht mehr gemessen werden konnte. Der Durchfluß durch die Ventile in Öffnungsrichtung war abhängig vom über dem Ventil abfallenden Differenzdruck und von der Dicke der Polyimidscheibe 6. Für eine 0,78 »m dicke Polyimidscheibe ergab sich bei einem Differenzdruck von 200 hPa ein Heliumfluß von ca. 3,8 hPa l/s. Die Figuren 1f und 1g zeigen das Ventil im geschlossenen bzw. geöffneten Zustand. Wegen des größeren Elastizitätsmoduls und der relativ hohen inneren Spannung der Titanmembran 3 wölbt sich die Polyimidscheibe 6 bei Anliegen eines Differenzdruckes mehr aus als die Titanmembran und verschließt bzw. öffnet das Mikroventil.

Die inneren Spannungen der verwendeten Membranen betrugen 200 N/mm² (Titan) bzw. 50 N/mm² (Polyimid). Vorteilhaft für die Herstellung der Mikroventile ist eine geringere innere Spannung des Ventilkörpers 6 im Vergleich zum Ventilsitz 3. Als Bereich der inneren Spannungen für den Ventilsitz 3 wird 100 N/mm² bis 1000 N/mm² und für den Ventilkörper 6 wird 0 bis 70 N/mm² angegeben. Je kleiner die inneren Spannung des Ventilkörpers im Vergleich zum Ventilsitz 3 ist, desto besser funktioniert das Mikroventil.

Entsprechend soll der Elastizitätsmodul des Membranmaterials mit der geringeren inneren Spannung möglichst klein sein im Vergleich zum Elastizitätsmodul des anderen Membranmaterials. Im Falle der drei Anwendungsbeispiele waren die Elastizitätsmodule 130000 N/mm² für Titan bzw. 3500 N/mm² für Polyimid. Das Verhältnis der Elastizitätsmodule sollte so groß wie möglich sein.

Im zweiten Anwendungsbeispiel wird eine Herstellungsvariante beschrieben, die es erlaubt, in der Titanschicht 3 auch sehr empfindliche Strukturen anzubringen, die bei der in EP 0 104 685 beschriebenen Trennung von Membran und Substrat zerstört werden könnten:
Die Figuren 2a und 2b zeigen dieses Beispiel:
Nach der Beschichtung der Siliziumscheibe mit Kohlenstoff und Titan wurde die Titanschicht 3 nicht strukturiert, sondern gleich mit einer Opferschicht 5 aus Kupfer mit einem Durchmesser von ca. 1 mm und einer Dicke von ca. 1 »m und mit einer fotosensitiven Polimidschicht 6 mit einem Durchmesser von ca. 5 mm versehen (vergl. Fig. 2a). Die Polyimidschicht wurde mit den bekannten Methoden der Fotolithographie strukturiert. Die Titanschicht wurde dann mit den auf ihr befindlichen Strukturen wie in EP 0 104 685 beschrieben auf einen festen Rahmen übertragen. Auf die so hergestellte Titanmembran wurde mit bekannten Methoden der Dünnfilmtechnik eine ca. 1 »m dicke Fotolackschicht 9 aufgeschleudert (Fig. 2b).

Aufgrund der inneren Spannungen, die fertigungsbedingt in der Opferschicht 5 vorhanden waren, kam es zu Verzügen in der dünnen Titanmembran, die im Mikroskop beobachtet werden konnten.

Dadurch war es möglich, die Lage der Opferschicht 5 auch von der dieser Schicht abgewandten Seite der Membran festzustellen und eine Chromglasmaske relativ zu diesen Strukturen auszurichten. Bei der Ausrichtung der Maske nur mit der Hand wurde bereits eine Justiergenauigkeit von ca. 20 »m erreicht. Dies stellt aber keine Grenze der erreichbaren Genauigkeit dar, da sich die Genauigkeit durch eine apparative Justierung noch wesentlich verbessern läßt.

Der Fotolack 9 wurde mit Hilfe der ausgerichteten Chromglasmaske belichtet und anschließend entwickelt. Durch die so im Fotolack 9 erzeugte Öffnung wurde mit einem kleinen Tropfen 1%iger Flußsäure eine Öffnung in die Titanmembran eingeätzt. Die Opferschicht 5 verhinderte dabei, daß sich die Säure zwischen Polyimid 6 und Titanmembran 3 ausbreitete und die Titanmembran an ungewünschter Stelle beschädigte.

Es ist auch möglich, die Titanmembran 3 in den Bereichen 3b auf der dem Fotolack abgewandten Seite mit einem Schutzlack zu versehen und die gesamte Probe in 1%ige Flußsäure einzutauchen. Dieses Verfahren hat den Vorteil, daß die Ätzung in kürzerer Zeit durchgeführt werden kann. Allerdings ist dann das Handhaben einer größeren Säuremenge erforderlich und es muß (z. B. durch die Wahl eines entsprechenden Rahmenmaterials) sichergestellt sein, daß die Säure nicht den Rahmen 8 angreifen kann.

Der Fotolack 9 wurde entfernt und die Opferschicht 5 mit einer 35%igen Salpetersäurelösung aufgelöst. Dabei ist es sowohl möglich, die Opferschicht mit einem kleinen Tropfen dieser Lösung aufzulösen, als auch, die ganze Probe in eine solche Lösung einzutauchen. Das Eintauchen der ganzen Probe hat den Vorteil, daß der Auflösungsvorgang weniger Zeit in Anspruch nimmt. Wird die Opferschicht mit nur einem kleinen Tropfen Lösung entfernt, so ergibt sich der Vorteil, daß der Rahmen 8 nicht gegen die Lösung unempfindlich zu sein braucht.

Eine ca. 1 »m dünne Opferschicht erwies sich als so dünn, daß es auch möglich war, die Opferschicht 5 vor der Übertragung der Titanschicht 3 auf den Rahmen 8 zu entfernen. Nach der Entfernung der Opferschicht haftete die Polyimidschicht 6 so sehr an der Titanschicht 3, daß sich die Säure zwischen Polyimid 6 und Titanmembran 3 nicht ausbreitete und die Titanmembran nicht an ungewünschter Stelle beschädigte.

Der Vorteil des im zweiten Anwendungsbeispiel beschriebenen Verfahrens liegt darin, daß in die Titanschicht 3 feine Mikrostrukturen eingebracht werden können, die bei der mechanischen Trennung von Titanschicht und Substrat beschädigt würden.

Im dritten Anwendungsbeispiel wird ein Verfahren beschrieben, bei dem zusammen mit der Opferschicht auch ein Teil des Substrates aufgelöst wird. Dieses Verfahren erlaubt ebenso wie das im zweiten Anwendungsbeispiel beschriebene die Herstellung sehr empfindlicher Ventilstrukturen. Das im folgenden beschriebene Verfahren zeichnet sich zudem durch nur wenige Bearbeitungsschritte aus:

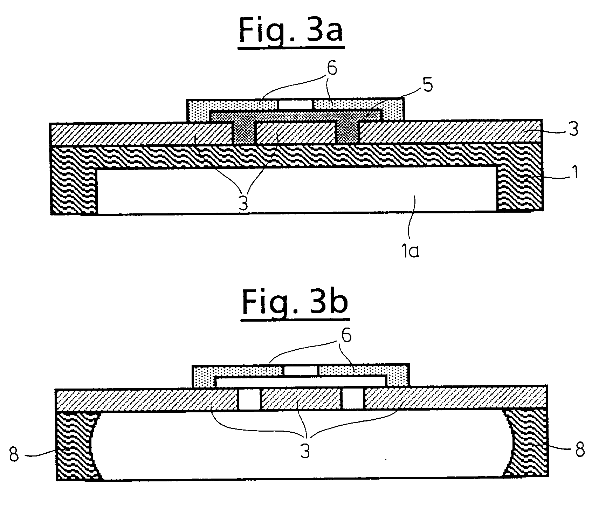

Die Figuren 3a und 3b zeigen dieses Anwendungsbeispiel.

Auf ein Substrat 1 aus einer Eisen-Nickel-Legierung wird durch Kathodenzerstäubung die ca. 2 »m dünne Titanschicht 3 aufgebracht. Die Titanschicht 3 wird mit bekannten Methoden der Fotolithographie strukturiert und die Opferschicht 5 wie in den vorhergehenden Anwendungsbeispielen aufgebracht und strukturiert. Darüber wird eine ca. 1 »m dünne Schicht eines fotoempfindlichen Polyimids 6 aufgeschleudert und ebenfalls fotolithographisch strukturiert (vergl. Fig. 3a).

Die so hergestellte Ventilstruktur wird dann freigelegt, indem das Substrat 1 von seiner Rückseite her teilweise in 35%iger Salpetersäure aufgelöst wird (vergl. Fig. 3b). Bei der teilweisen Auflösung des Substrates 1 wird ein Rahmen 8 stehen gelassen, über dem die Titanmembran 3 nach der teilweisen Auflösung des Substrates frei gespannt ist. Die teilweise Auflösung des Substrates wird beschleunigt, wenn im Substrat 1 eine Ätzgrube 1a vorgesehen wird, so daß nur noch eine geringere Materialstärke aufgelöst werden muß. Wenn die Opferschicht aus einem Material besteht, das wie z. B. Kupfer ebenfalls in der Ätzlösung aufgelöst wird, die auch für die Ätzung des Substrates verwendet wird, kann mit diesem Arbeitsgang bereits die Herstellung des Ventils abgeschlossen werden. Andernfalls muß die Opferschicht in einem weiteren Herstellungsschritt entfernt werden.

Die in den Anwendungsbeispielen 1 bis 3 beschriebenen Mikroventile sind alle über die frei gespannte Titanmembran 3 mit dem Rahmen 8 verbunden. Die Ventile können deshalb mit diesem Rahmen gehandhabt und in ein Gerät eingebaut werden. Es ist auch möglich, auf der Membran 3 eine große Anzahl dieser Ventile vorzusehen, um sie dann aus der Membran herauszutrennen und einzeln in Geräte wie z. B. kleine Pumpen einzubauen. Bei der Herstellung gemäß Anwendungsbeispiel 3 liegen nach entsprechender Strukturierung der Titanschicht 3 und teilweiser oder völliger Auflösung des Substrates 1 viele Mikroventile nebeneinander in der Ätzlösung vor. Bei entsprechender Formgebung der Ätzgrube 1a ist es möglich, viele gerahmte Mikrostrukturen im Nutzen zu fertigen und so Herstellungskosten zu sparen.

Es ist aber auch möglich, bei den Anwendungsbeispielen 1 und 2 mehrere Rahmen oder einen entsprechend geformten Rahmen, der sich segmentieren läßt, mit der Titanschicht 3 zu verbinden, um viele Mikroventile gemeinsam herstellen zu können.

## Patentansprüche

1. Mikroventil welches aus einem Ventilkörper und einem Ventilsitz besteht, wobei
a) der Ventilsitz (3) Teil einer dünnen Membran ist,
b) der Ventilkörper (6) scheibenförmig ausgebildet und an seinem Rand dicht mit dem Ventilsitz (3) verbunden ist,
c) der Ventilsitz (3) und Ventilkörper (6) jeweils mindestens eine Öffnung (4, 7) aufweisen, wobei
d) die Öffnungen (4, 7) von Ventilkörper (6) und Ventilsitz (3) derart gegeneinander versetzt sind, daß bei Berührungen von Ventilsitz (3) und Ventilkörper (4) die Öffnungen (4, 7) sich nicht einmal teilweise überlappen, so daß das Ventil geschlossen ist, und
e) der Ventilsitz (3) eine relativ hohe innere Spannung und einen größeren Elastizitätsmodul aufweist als der Ventilkörper (6), so daß sich die Ventilkörperscheibe (6) bei Anliegen eines Differenzdruckes stärker auswölbt als die Ventilsitzmembran (3) und damit das Mikroventil verschließt bzw. öffnet.

2. Verfahren zur Herstellung des Mikroventils gemäß Anspruch 1, gekennzeichnet, durch folgende Verfahrensschritte:
a) auf ein Substrat (1) wird eine dünne elastische Schicht (3) mindestens mit einer Öffnung (4) aufgebracht,
b) auf diese Schicht (3) wird eine Opferschicht (5) aufgebracht, welche das Volumen zwischen dem späteren Ventilsitz (3) und dem späteren Ventilkörper (6) ausfüllt,
c) darauf wird eine weitere Schicht (6), welche mindestens eine Öffnung (7) aufweist, aufgebracht, welche die Opferschicht (5) derart umschließt, daß der Rand der Schicht (6) dicht mit der ersten Schicht (3) auf dem Substrat (1) verbunden ist,
d) dann wird die Opferschicht zwischen Ventilsitz (3) und Ventilkörper (6) aufgelöst und
e) das Substrat (1) von der ersten aufgebrachten Schicht (3) entfernt.

3. Verfahren nach Anspruch 2, dadurch gekennzeichnet, daß die Öffnung (4) in der zuerst auf das Substrat (1) aufgebrachten Schicht (3) erst nach der Entfernung des Substrates (1) von dieser Schicht (3) in diese eingebracht wird.

4. Verfahren nach einem der Ansprüche 2 oder 3, dadurch gekennzeichnet, daß auf dem Substrat (1) vor dem Aufbringen der elastischen Schicht (3) eine weitere Schicht (2) als Trennschicht aufgebracht wird.

## Claims

1. Microvalve, which comprises a valve body and a valve seat, wherein
a) the valve seat (3) is part of a thin diaphragm;
b) the valve body (6) is disc-shaped and is tightly connected at its edge to the valve seat (3);
c) the valve seat (3) and valve body (6) each have at least one aperture (4, 7), wherein
d) the apertures (4, 7) of the valve body (6) and valve seat (3) are offset from each other in such a manner that, when the valve seat (3) and valve body (6) are in contact with each other, the apertures (4, 7) do not even partially overlap, so that the valve is closed, and
e) the valve seat (3) has a relatively high internal tension and a greater modulus of elasticity than the valve body (6), so that the valve body plate (6) bulges more than the valve seat diaphragm (3) when a differential pressure is applied and thereby closes or respectively opens the microvalve.

2. Method of producing the microvalve according to claim 1, characterised by the following method steps:
a) a thin resilient layer (3), having at least one aperture (4), is applied to a substrate (1);
b) a disposable layer (5) is applied to this layer (3) and fills the volume between the later valve seat (3) and the later valve body (6);
c) a further layer (6), having at least one aperture (7), is applied thereto and surrounds the disposable layer (5) in such a manner that the edge of the layer (6) is tightly connected to the first layer (3) on the substrate (1);
d) then the disposable layer between valve seat (3) and valve body (6) is released; and
e) the substrate (1) is removed from the first applied layer (3).

3. Method according to claim 2, characterised in that the aperture (4) in the layer (3) initially applied to the substrate (1) is only formed in this layer (3) after the substrate (1) has been removed therefrom.

4. Method according to one of claims 2 or 3, characterised in that a further layer (2) is applied to the substrate (1) as a parting layer, prior to the application of the resilient layer (3).

## Revendications

1. Microsoupape composée d'un corps de soupape et d'un siège de soupape, dans laquelle :
a) le siège de soupape (3) est une partie d'une membrane mince,
b) le corps de soupape (6) est réalisé en forme de disque et est lié de manière étanche sur son bord au siège de soupape (3),
c) le siège de soupape (3) et le corps de soupape (6) ont chacun au moins une ouverture (4, 7), et
d) les ouvertures (4, 7) du corps de soupape (6) et du siège de soupape (3) sont décalées les unes par rapport aux autres, de manière que lors des contacts entre siège de soupape (3) et corps de soupape (4) les ouvertures (4, 7) ne se superposent pas même partiellement, de façon à pouvoir fermer la soupape, et
e) le siège de soupape (3) a une tension interne relativement élevée et un module d'élasticité plus grand que le corps de soupape (6), de sorte que le disque du corps de soupape (6) lors de la mise en place d'une différence de pression se courbe davantage que la membrane du siège de soupape (3) et donc obture ou ouvre la microsoupape.

2. Procédé de fabrication de la microsoupape selon la revendication 1, caractérisée par les étapes suivantes de procédé :
a) sur un substrat (1) est appliquée une couche mince élastique (3) avec au moins une ouverture (4),
b) sur cette couche (3) est appliquée une couche sacrifiée, qui remplit le volume compris entre le siège de soupape futur (3) et le corps de soupape à venir (6),
c) la dessus on applique une autre couche (6), qui comporte au moins une ouverture (7) et qui entoure la couche sacrifiée (5), de sorte que le bord de la couche (6) soit lié de manière étanche avec la première couche (3) sur le substrat (1),
d) ensuite on dissout la couche sacrifiée située entre le siège de soupape (3) et le corps de soupape (6), et
e) le substrat (1) est éloigné de la première couche (3) appliquée.

3. Procédé selon la revendication 2, caractérisé en ce que l'ouverture (4) dans la couche (3) appliquée d'abord sur le substrat (1) est mise en place dans cette couche (3) dès l'enlèvement du substrat (1) de cette couche.

4. Procédé selon une des revendications 2 ou 3, caractérisé en ce que sur le substrat (1) avant d'appliquer la couche élastique (3), on applique une autre couche (2) est appliquée comme couche de séparation.
